# EUROPEAN PATENT APPLICATION

(11) **EP 2 051 155 A1**
(43) Date of publication of application: **22.04.2009**
(21) Application number: 07020569.5
(22) Date of filing: 20.10.2007
(51) Int. Cl.: G06F 1/26

(54) **Self powered data card**

(71) Applicant: T-Mobile International AG, 53227 Bonn (DE)
(72) Inventor: Schatzmayr, Rainer, 53229 Bonn (DE); Neumann, Peter, 81739 München (DE)
(74) Representative: Riebling, Peter

(57) **Abstract**

The invention relates to a data card comprising a data processing device, a connecting interface for exchanging data with a hosting device and an input/output interface for receiving and/or transmitting data to and from an external device, an external system or the environment. The data card is characterized in that it is a self powered data card.

## Description

### Field of the Invention

The invention generally relates to a data card. A data card is any removable computer component, approximately the size of a credit card, that contains data, or that contains non-volatile memory to which data can be written and from which data can be recovered. Such a data card may comprise a data processing device, a connecting interface for exchanging data with a hosting device and an input/output interface for receiving and/or transmitting data to and from an external device, an external system or the environment.

### Discussion of the State of the Art

Examples for today used data cards are PCMCIA (Personal Computer Memory Card International Association) or PC cards like WLAN or Web'n Walk cards. Such kind of cards use an identical 68 pin dual row connecting interface to a hosting device, i.e. a laptop computer, and are powered by the hosting device with a 3.3 or 5 Volts supply voltage.

PC Card (originally PCMCIA) is the form factor of a peripheral interface designed for laptop computers. It was originally for memory expansion, but the existence of a usable general standard for notebook peripherals led to many kinds of devices being made available in this form. Extended data cards allow the addition of components that must remain outside the system for proper operation, such as antennas for wireless applications. Typical devices include network cards, modems, hard disks, and other functionality like 10/100 Mbps Ethernet Adapters, A/D Converters and other Data Acquisition Devices, AM/FM Radio Tuner, Biometrics cards (Fingerprint reader), Bluetooth cards, CD-ROM Interface, Cellular Phone Interface (WAN), Digital Camera, Docking Station Interface, Ethernet LAN Adapters, GPS (Global Positioning System) Cards, Hard Drives (Rotating), Infrared Wireless LAN Adapters, ISDN Cards, Joystick Interface Cards, Modem/Ethernet Combination Cards, Modem Cards, Parallel Port Interface, PDA PC Card, Radio LAN Adapters, Security Tokens, Serial Port Interface, SmartCard Readers, Sound Cards, Input and Output, Token Ring LAN Adapter Cards, TV Tuner, VGA, Video Capture/Frame Grabber Cards, Video Teleconferencing Cards, are also on the market.

Most data cards are very similar to mobile devices. They have an antenna and a SIM card reader but are missing man-to-machine input and output devices, e.g. a display, a keypad, or the like. Data cards are also missing any kind of internal power supply and large capacity data storage facilities. Data cards therefore cannot operate independently of a hosting device because they require an external power supply in order to exchange data with a hosting device and other devices. Currently available mobile phones may work as a modem for a hosting laptop computer by using a data cable or a Bluetooth connection to the hosting device. However, a data exchange with the data card is only possible as long as the hosting device is under operation.

At present, the disadvantage of data cards is that they can only transmit and receive data to and from external devices and systems while the hosting device is switched on and in operation. In other words, while the hosting device is in standby mode or switched off the data cards miss the ability to exchange data by lacking any power supply.

### Summary of the Invention

It is the object of the present invention to overcome the above drawbacks by providing a data card which is able to transmit and receive data to and from external devices and systems independently from the operating state of a hosting device.

This object is achieved by providing a data card as characterized in the independent claim.

Preferred embodiments and advantageous features of the invention are disclosed in the dependent claims.

The data card according to the invention is characterized in that it is a self powered data card.

The self powered data card comprises an internal power supply which is adapted to supply the data card with electric energy for at least a predetermined period of time. The power supply comprises for example a rechargeable or non-rechargeable battery, or a capacitor with high energy density, preferably a socalled supercapacitor or golden capacitor.

The self powered data card according to the invention may operate independently from a hosting device. This has the advantage that it can exchange data with external devices or systems or can receive environmental data via its input/output interface independently of the operating state of the hosting device. The data to be received or transmitted via the input/output interface can be temporarily stored in the data card and made available for later access by the hosting device. The data card is operable even if the hosting device is switched off or in a standby mode.

In a preferred embodiment of the present invention the self powered data card has the ability to internally store a large amount of incoming or outgoing data before it is to be transferred to the hosting device or sent via an input/output interface to an external device or system. The internal memory is preferably a non-volatile (flash memory) or volatile memory (RAM) for storing a predetermined amount of data to be received or transmitted via the input/output interface. In another preferred embodiment the data card comprises an interface for connecting an external attached non-volatile or volatile memory such as flash based memory cards (SD, MMC, Memory Stick, Transflash, etc....).

The data card and method of operation of the invention, together with additional objects and advantages thereof, will be best understood from the following description of a specific embodiment when read in connection with the accompanying drawings.

### Brief Description of the Drawings

Figure 1 is a block diagram of a preferred embodiment of a data card according to the invention.
Figure 2 is a block diagram of an example of use of the data card.

### Detailed Description of a Preferred Embodiment of the Invention

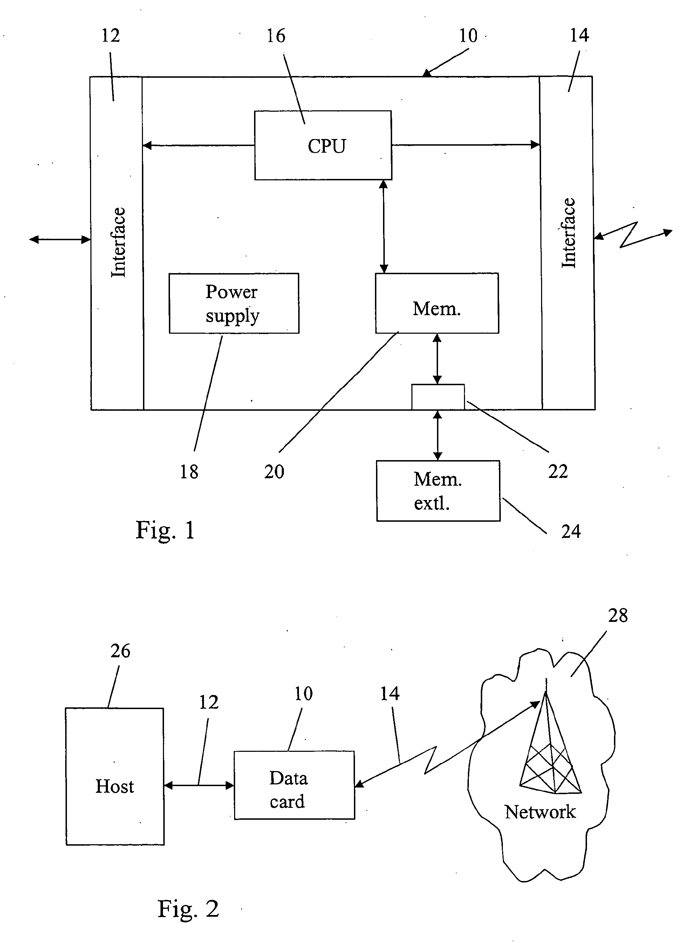

Figure 1 illustrates a data card 10 which is for example a wireless network interface card comprising a bidirectional wireless interface 14 for connecting to a wireless mobile telephone network, for example a GSM telephone network, or a wireless computer network (WLAN). The data card 10 comprises an interface 12, for example a bidirectional cardbus interface for making a data connection to a hosting device, for example a laptop computer. The data card 10 further comprising a central processing unit for 16 processing the data to be sent or received via the interfaces 12 and 14.

According to the invention the data card 10 comprises an internal power supply 18 for providing electric energy independently from any hosting device. The power supply preferably includes a rechargeable device such as an accumulator or a capacitor.

Preferably, the data card 10 further includes an internal memory 20 for storing a large amount of data which is connected to the central processing unit 16. The memory 20 may be a flash memory or a volatile memory such as a random access memory. Additionally or alternatively the data card 10 may include a memory interface 22 for connecting an external non-volatile or volatile memory 24 such as a memory stick, a compact flash card, etc.

Figure 2 illustrates an example of use of the data card 10. The data card 10 is connected via the cardbus interface 12 to the hosting device 26 and via the wireless interface 14 to the mobile telephone network 28. Via the cardbus interface 12 the data card 10 can exchange data with the hosting device 10 and via the interface 14 the data card 10 can exchange data with the mobile telephone network 28.

While the hosting device 26 is operating, the data card 10 is in an "online" mode of operation. During the online mode the data card 10 can be initialized, preprogrammed or settings of the data card can be changed by a user of the hosting device 26. Data can be transmitted and received via the wireless interface 14 to and from the mobile telephone network 28 and transmitted and received via the interface 12 to and from the hosting device 26. During the online mode of operation the data card 10 works as a standard data card, where the rechargeable device of the power supply is charged using the supply voltage provided by hosting device 26 on the cardbus interface 12.

When the hosting device 26 is switched in a standby mode or is even switched off, this is detected by the data card 10 for example due to the missing power supply voltage provided on the cardbus interface 12. In this case the data card 10 switches in an "offline" mode of operation. The offline mode is maintained as long as the hosting data device 26 is in standby mode or switched off. During this offline mode the data card 10 is powered from the internal power supply 18. During the offline mode, the data card 10 is still capable to receive incoming or send outgoing data via the wireless interface 14. The received data are buffered in the internal memory 20 or the external attached memory 24, consequently. As an option, outgoing data, cached in the internal memory 22 or the external attached memory 24 may be transmitted via the wireless interface 14, dependent on the power level of the internal power supply 18.

In the offline mode the data card 10 is working like a standalone device irrespective of the connection to the hosting device 26. The advantage is that for example internet on-line sessions, like chat, are not interrupted, not closed or effected in any way. Long lasting re-syncs of email accounts can be avoided, as emails can be continuously received on the data card 10, or sent independent from the hosting device 26. Usual visited web sites can be downloaded, while the hosting device 26 is in stand-by mode or switched off. Web data (like photo or text) can also be uploaded to external web sites or blogs. Even if the hosting device 26 is moved, update information of the mobile telephone network such as cell id, GPS location and others, may be received and transmitted by the always running self powered data card 10.

### List of reference numerals

- 10: Data card
- 12: Interface
- 14: Interface
- 16: Central processing unit
- 18: Power supply
- 20: Internal memory
- 22: Memory interface
- 24: External memory
- 26: Hosting device
- 28: Mobile telephone network

## Claims

1. Data card (10) comprising a data processing device (16), a connecting interface (12) for exchanging data with a hosting device (26) and an input/output interface (14) for receiving and/or transmitting data to and from an external device, an external system (28) or the environment, **characterized in that** it is a self powered data card.

2. Data card according to claim 1, **characterized in that** it comprises an internal power supply (18).

3. Data card according to claim 1 or 2, **characterized in that** the internal power supply (18) is adapted to supply the data card (10) with electric energy for a period of time.

4. Data card according to any of claims 1 to 3, **characterized in that** the internal power supply (18) comprises is a rechargeable or non-rechargeable battery.

5. Data card according to any of claims 1 to 3, **characterized in that** the internal power supply (18) comprises a capacitor with high energy density, preferably a supercapacitor or golden capacitor.

6. Data card according to any of claims 1 to 5, **characterized in that** it is adapted to receive and transmit data via the input/output interface (14) independently from the operating state of the hosting device (26), and to store this data temporarily in a memory (20, 24) for a later processing and/or transmission to the hosting device (26).

7. Data card according to any of claims 1 to 6, **characterized in that** it is operable even if the hosting device (26) is switched off or in a standby mode.

8. Data card according to any of claims 1 to 7, **characterized in that** it comprises an internal non-volatile or volatile memory (20) for storing a predetermined amount of data to be received or transmitted via the input/output interface (14).

9. Data card according to any of claims 1 to 8, **characterized in that** it comprises a memory interface (22) for connecting an external non-volatile or volatile memory (24) for storing a predetermined amount of data to be received or transmitted via the input/output interface (14).

10. A method for operating a data card (10) independently from a hosting device (26).

11. A method for operating a data card (10) independently from an external power supply.
